# EUROPEAN PATENT APPLICATION

(11) **EP 4 617 770 A1**
(43) Date of publication of application: **17.09.2025**
(21) Application number: 23889189.9
(22) Date of filing: 09.11.2023
(51) Int. Cl.: G03B 17/55, G03B 17/12, G03B 30/00, H05K 1/18

(54) **CAMERA MODULE**

(30) Priority: 10.11.2022 KR 20220149976; 25.01.2023 KR 20230009777
(71) Applicant: LG INNOTEK CO. LTD, Gangseo-gu Seoul 07796 (KR)
(72) Inventor: KIM, Kwang Sung, Seoul 07796 (KR); KIM, Seul Ki, Seoul 07796 (KR); PARK, Jin Young, Seoul 07796 (KR); CHOI, Jin Wook, Seoul 07796 (KR); HWANG, Sun Min, Seoul 07796 (KR)
(74) Representative: M. Zardi & Co S.A.
(86) International application number: PCT/KR2023/018012
(87) International publication number: WO 2024/101932

(57) **Abstract**

This camera module comprises: a lens holder having a first hole; a lens module of which at least a part is coupled to the first hole, and which protrudes above the lens holder; a mounting holder disposed on the lens holder and having a second hole in which a part of the lens module is disposed; a glass disposed on the mounting holder; a heating member disposed on the surface of the glass; a substrate module disposed below the lens holder; and a connecting member for connecting the heating member and the substrate module.

## Description

### [Technical Field]

The present embodiment relates to a camera module.

### [Background Art]

Recently, ultra-small camera modules have been developed and are widely used in small electronic products such as smartphones, laptops, and game consoles.

As automobiles become more popular, ultra-small cameras are widely used in vehicles as well as in small electronic products. For example, black box cameras for vehicle protection or objective data on traffic accidents, rear surveillance cameras that allow drivers to monitor the blind spots at the rear of the vehicle through a screen to ensure safety when reversing, and surrounding detection cameras that can monitor the surroundings of the vehicle are provided.

The camera may be equipped with a lens, a lens holder that accommodates the lens, an image sensor that converts an image of a subject collected in the lens into an electrical signal, and a printed circuit board on which the image sensor is mounted. The housing forming the outer appearance of the camera is formed with a structure in which the entire area is sealed to prevent internal components from being contaminated by foreign substances containing moisture.

Due to the nature of automobiles being disposed outdoors, the temperature inside and outside the automobile forms various distributions depending on the time of year. For example, the indoor temperature may be higher than the outdoor temperature in summer, and may drop to a temperature below zero in winter. Therefore, condensation including frost may occur in components including a lens and glass of a camera according to an abrupt change in temperature. Accordingly, a satisfactory photographed object may not be obtained or a product may fail to break down.

### [Detailed Description of the Invention]

### [Technical Subject]

The purpose of the present embodiment is intended to provide a camera module that can quickly remove frost or ice that occurs on a lens surface through a heating function and can more accurately detect the temperature of the lens surface.

### [Technical Solution]

A camera module according to the present embodiment comprises: a lens holder including a first hole; a lens module, at least a portion thereof is coupled to the first hole and protruded upwardly from the lens holder; a mounting holder being disposed on the lens holder and including a second hole in which a portion of the lens module is disposed; a glass being disposed on the mounting holder; a heating member being disposed on a surface of the glass; a substrate module being disposed downwardly from the lens holder; and a connecting member for connecting the heating member and the substrate module.

The mounting holder may include a through hole in which a portion of the connecting member is disposed.

A protruded portion to which one end of the connecting member is coupled can be disposed on an upper surface of the mounting holder.

The connecting member includes a first region and a second region having a width smaller than that of the first region, and the first region can be disposed in the protruded portion.

It may include a glass cover being coupled onto the mounting holder and having the glass being coupled to an upper surface.

It may include a housing being coupled to a lower portion of the mounting holder and accommodating the substrate module and the lens holder inside.

At least a portion of the connecting member can be disposed outside the lens holder.

The lens holder includes a body portion and a support portion being protruded from a side surface of the body portion, and a portion of the connecting member can come into contact with the support portion.

The support portion includes a portion having a concave guide groove, and a portion of the connecting member can be disposed in the guide groove.

According to another embodiment, a camera module comprises: a substrate module; a connecting member being electrically connected to the substrate module; a lens module being disposed at an upper side of the substrate module; a mounting holder having a plurality of holes through which the lens module and the connecting member penetrate; glass being disposed on the mounting holder; and a heating member being disposed on a lower surface of the glass and electrically connected to the connecting member, wherein the mounting holder comprises: a base; a through hole being formed in the base and through which a portion of the connecting member is disposed; and a protruded portion being formed to be protruded from one surface of the base, wherein a portion of the connecting member is disposed on the protruded portion, and wherein a portion of the connecting member is in contact with the heating member.

### [Advantageous Effects]

Through the present embodiment, the power connection structure to the heating member for surface heating of the glass is compactly disposed within the housing, so that power supply and control to the heating member can be performed in an integrated manner along with the control of the camera module, which has the advantage.

In addition, since the temperature sensor can be disposed close to the glass to detect the temperature of the lens more accurately, there is an advantage in that the heating member can be controlled more efficiently.

In addition, since only the glass cover and glass can be redisposed when the glass is damaged, there is an advantage in that maintenance and repair become facilitated.

### [Brief Description of Drawings]

FIG. 1 is a perspective view illustrating the outer appearance of a camera module according to an embodiment of the present embodiment.
FIG. 2 is an exploded perspective view illustrating the glass, glass holder, and heating member in FIG. 1.
FIG. 3 is a cross-sectional view of a camera module according to an embodiment of the present embodiment.
FIG. 4 is an exploded perspective view of a camera module according to an embodiment of the present embodiment.
FIG. 5 is a view illustrating FIG. 4 from a different angle.
FIG. 6 is a view illustrating a portion of a camera module according to an embodiment of the present embodiment cut away.
FIG. 7 is a perspective view illustrating a combined structure of a mounting holder, a lens module, and a substrate module according to an embodiment of the present embodiment.
FIG. 8 is a plan view illustrating one surface of a heating member according to an embodiment of the present embodiment.
FIG. 9 is an exploded perspective view of a mounting holder and a connecting member according to an embodiment of the present embodiment.
FIG. 10 is a perspective view of a vehicle according to an embodiment of the present embodiment.

### [BEST MODE]

Hereinafter, preferred embodiments of the present invention will be described in detail with reference to the accompanying drawings.

However, the technical idea of the present invention is not limited to some embodiments to be described, but may be implemented in various forms, and inside the scope of the technical idea of the present invention, one or more of the constituent elements may be selectively combined or substituted between embodiments.

In addition, the terms (including technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may include the plural form unless specifically stated in the phrase, and when described as "at least one (or more than one) of A and B and C", it may include one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also include cases of being 'connected', 'coupled', or 'interconnected' due that another component between that other components.

In addition, when described as being formed or disposed in "on (above)" or "below (under)" of each component, "on (above)" or "below (under)" means that it includes not only the case where the two components are directly in contact with, but also the case where one or more other components are formed or disposed between the two components. In addition, when expressed as "on (above)" or "below (under)", the meaning of not only an upward direction but also a downward direction with respect to one component may be included.

The 'optical axis direction' used hereinafter is defined as the optical axis direction of the lens. Meanwhile, the 'optical axis direction' may correspond to 'up-down direction', 'z-axis direction', and the like.

Hereinafter, the present invention will be described in more detail with reference to the attached drawings.

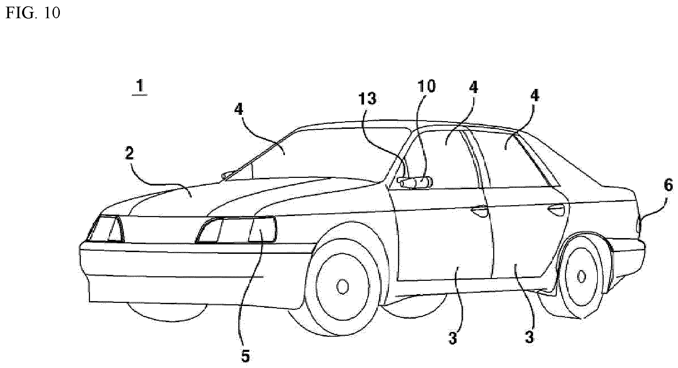

FIG. 10 is a perspective view of a vehicle according to an embodiment of the present invention.

Referring to FIG. 10, a vehicle **1** according to an embodiment of the present invention may include a body **2,** a door **3,** glass **4,** a headlamp **5,** a tail lamp **6,** and a camera module **10.**

The body **2** may be an exterior member of the vehicle **1.** The body **2** may have various forms, such as a frame type and a monocoque type. One or more doors **3** may be coupled to a side surface of the body **2.** In addition, the glass **4** may be coupled to the front and rear (a portion where a pillar is formed) of the upper portion of the body **2** and the door **3.** The headlamp **5** may be mounted on the front of a lower portion of the body **2.** The tail lamp **6** may be mounted on the rear of a lower portion of the body **2.**

A camera module **10** may be installed on a side portion of the body **2** or on a door being disposed at the front of one or more of the doors **3.** The camera module **10** may be installed in front of the glass **4** coupled to the door **3.** That is, a side mirror in the vehicle **1** of the present embodiment may be redisposed with the camera module **10.**

The camera module **10** can photograph images of both rear sides of the vehicle. Images photographed by the camera module **10** can be electrically connected to a display unit (not shown) through an electronic control unit (ECU), and the like. Accordingly, images photographed by the camera module **10** can be controlled by the electronic control unit (ECU) and played back on the display unit.

An interior space for a driver can be formed inside the body **2.** A display unit can be installed inside the body **2.** The display unit can output an image photographed by the camera module **10.** The display unit can be installed on a dashboard (not shown) inside the body **2.**

The installation form of the camera module **10** inside the vehicle **1** described above is exemplary, and the camera module **10** can be used in one or more among a front camera, a side camera, a rear camera, and a black box of the vehicle **1.**

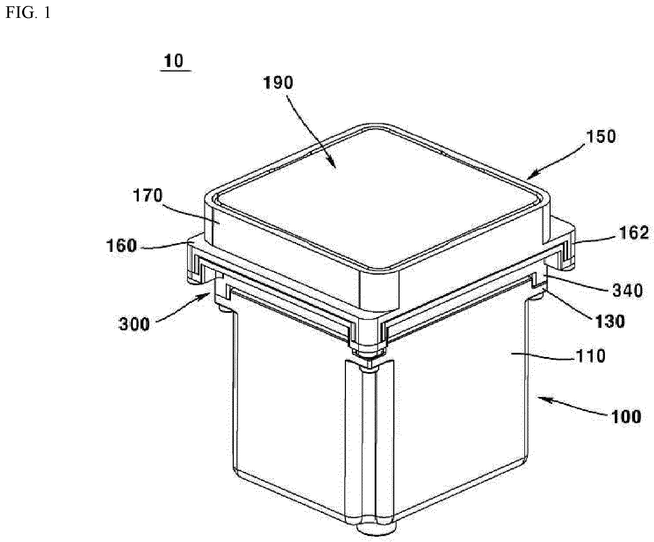

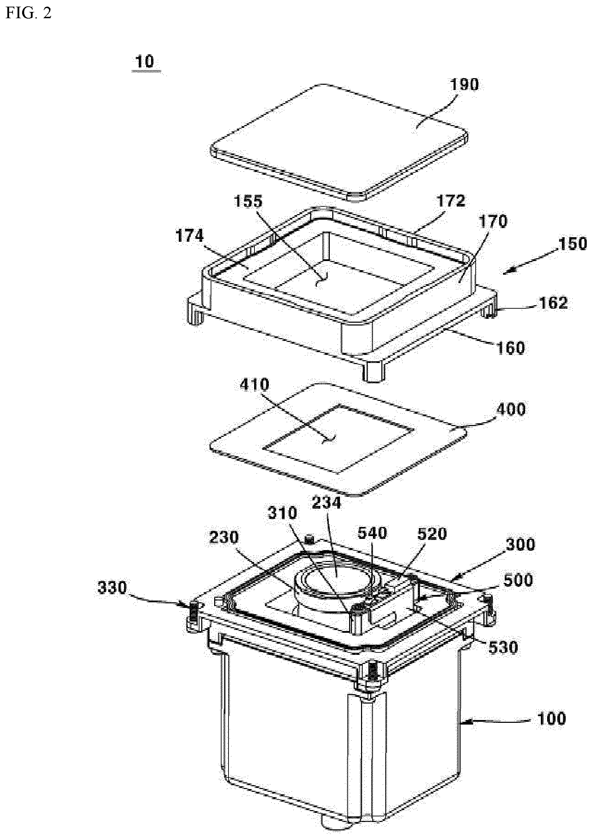

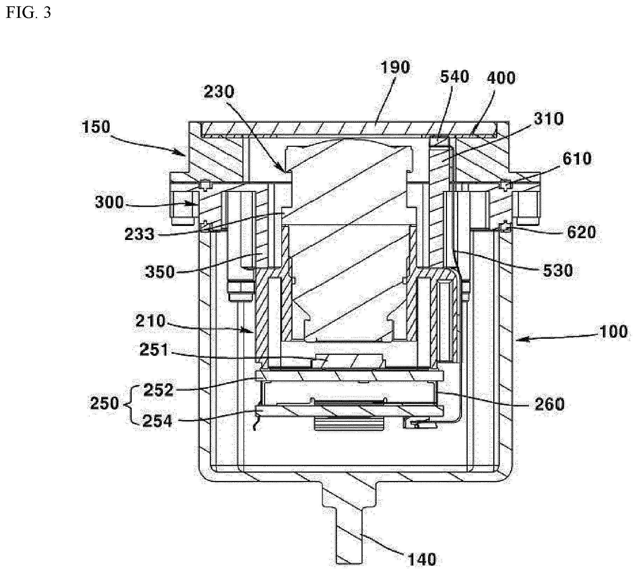

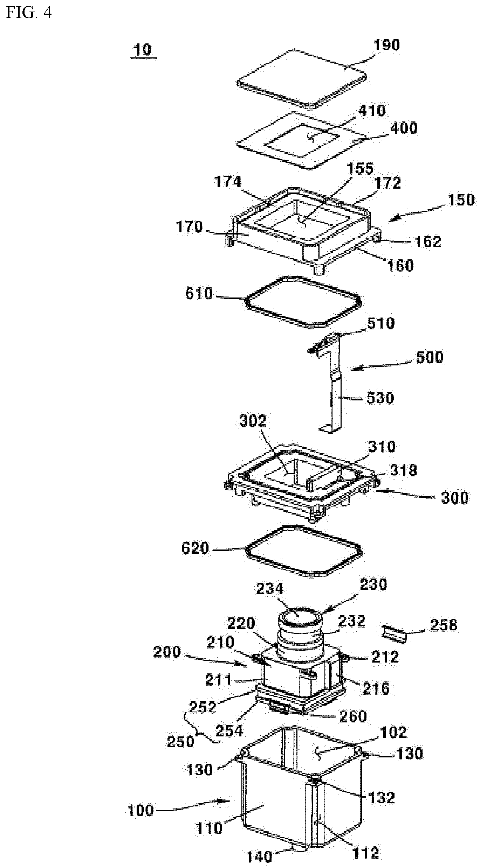

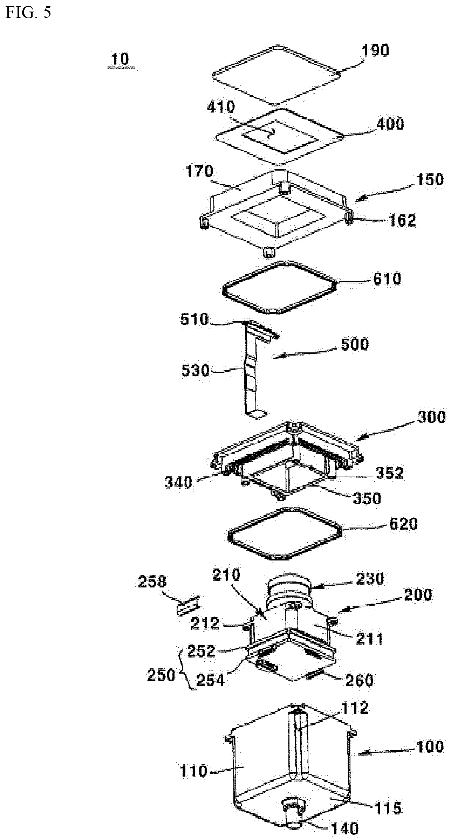

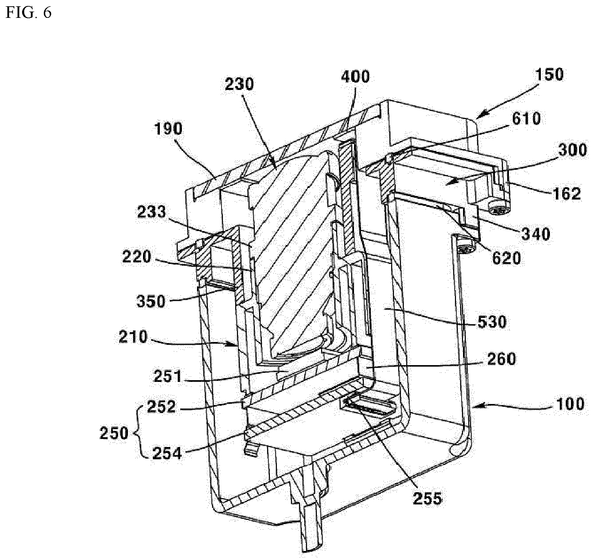

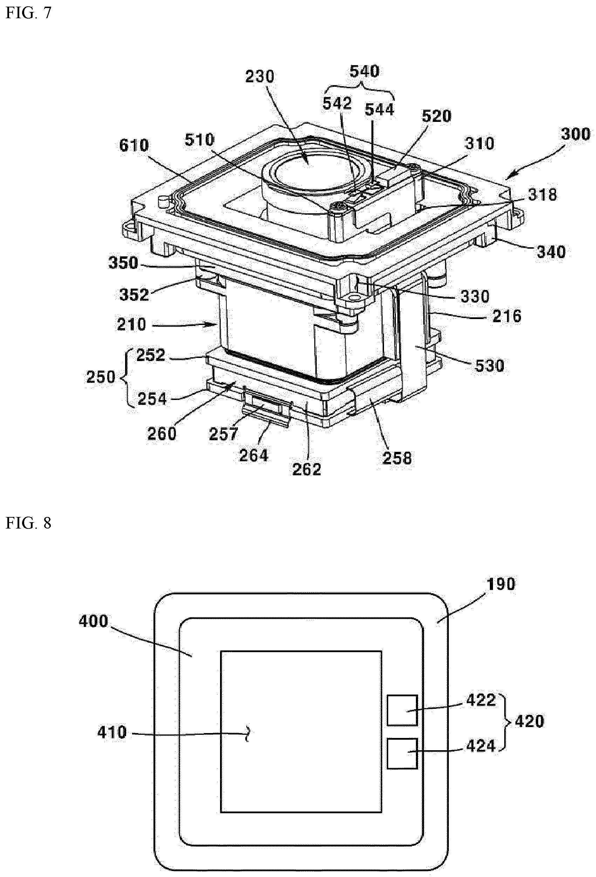

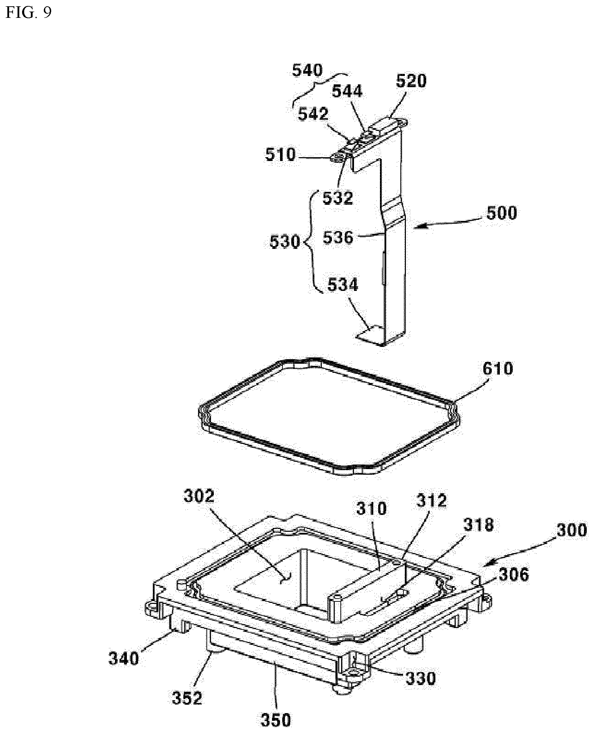

Hereinafter, a camera module according to an embodiment is described with reference to the drawings
FIG. 1 is a perspective view illustrating the outer appearance of a camera module according to an embodiment of the present embodiment; FIG. 2 is an exploded perspective view illustrating the glass, glass holder, and heating member in FIG. 1; FIG. 3 is a cross-sectional view of a camera module according to an embodiment of the present embodiment; FIG. 4 is an exploded perspective view of a camera module according to an embodiment of the present embodiment; FIG. 5 is a view illustrating FIG. 4 from a different angle; FIG. 6 is a view illustrating a portion of a camera module according to an embodiment of the present embodiment cut away; FIG. 7 is a perspective view illustrating a combined structure of a mounting holder, a lens module, and a substrate module according to an embodiment of the present embodiment; FIG. 8 is a plan view illustrating one surface of a heating member according to an embodiment of the present embodiment; and FIG. 9 is an exploded perspective view of a mounting holder and a connecting member according to an embodiment of the present embodiment.

Referring to FIGS. 1 to 9, a camera module **10** according to the present embodiment may comprise: a housing **100;** a lens holder **210;** a lens module **230;** a substrate module **250;** a mounting holder **300,** a glass cover **150;** a glass **190;** a heating member **400;** and a connecting member **500,** but may be implemented except for the configuration of the port or does not exclude additional configurations.

The camera module **10** may include a housing **100.** The housing **100** may be referred to as any one among a rear body, a lower housing, and a first housing. The housing **100** may include a space **102** to accommodate the lens holder **210** and the substrate module **250** therein. The space **102** may be opened upward. The space **102** may be covered by the mounting holder **300.** The housing **100** may have a rectangular cross-sectional shape. The housing **100** may be formed in a box shape with an open upper surface.

The housing **100** may include a first side plate **110** and a bottom plate **115.** The first side plate **110** may form a side surface of the housing **100.** The first side plate **110** may have a shape being bent from an edge of the bottom plate **115** and extended upward. The first side plate **110** may include four side plates. Each of the four first side plates **110** may have a square plate shape. A groove **112** being recessed more inward than the other region may be formed in a region adjacent to a plurality of first side plates **110.**

The bottom plate **115** may form a bottom surface of the camera module **10** or the housing **100,** and may be connected to lower ends of the four first side plates **110.** A connector withdrawal portion **140** having a shape being protruded more downward than other regions may be disposed on a bottom surface of the bottom plate **115.** A connector (not shown) to be described later may be disposed inside the connector withdrawal portion **140.** A lower end of the connector withdrawal portion **140** may be protruded more downward than a bottom surface of the bottom plate **115.** An external terminal may be coupled to the connector withdrawal portion **140,** and thus the camera module **10** may be electrically connected to the external terminal through the connector. The camera module **10** may receive power through the external terminal or may transmit and receive an electrical signal related to driving of the camera module **10.**

A coupling groove **132** having a shape being recessed more downward than other regions may be formed on an upper surface of the housing **100.** The coupling groove **132** may be disposed in each among four corner regions of the housing **100.** The first coupling portion 130 may be disposed in a bottom surface of the coupling groove **132.** A screw hole may be formed in the first coupling portion **130** so that the screw penetrates therethrough. When screw-coupled to the first coupling portion **130,** the fastening process may be performed through a groove **112** formed in a side surface of the housing **100.** A second coupling portion **340** of the mounting holder **300,** which will be described later, may be coupled to the first coupling portion **130.** The second coupling portion **340** may be screw-coupled to the first coupling portion **130** through the screw.

The camera module **10** may include a camera **200** being disposed in the space **102** inside the housing **100.** The camera **200** may include a lens holder **210,** a lens module **230,** and a substrate module **250.**

The lens holder **210** may include a body portion **211** and a barrel part **220.** The body portion **211** may be formed in a box shape with an open bottom surface. A plurality of side plates may be formed on a side surface of the body portion **211.** The bottom surface of the body portion **211** may be coupled to an upper surface of the first substrate **252** of the substrate module **250** to be described later. An adhesive member may be disposed between a bottom surface of the body portion **211** and an upper surface of the first substrate **252.** The adhesive member may include epoxy. A distance in an optical axis direction between the image sensor **251** and the lens module **230** to be described later may be adjusted by adjusting the thickness of the adhesive member.

A support portion **216** having a shape being protruded more outward from the other region may be formed on a side surface of the body portion **211.** The support portion **216** may be formed on any one among a plurality of side plates forming the side surface of the body portion **211.** The support portion **216** may support the connecting member **500** in the housing **100.** The inner surface of the connecting member **500** may be in contact with an outer surface of the support portion **216.**

Meanwhile, although not illustrated, a guide groove to which the connection portion **530** of the connecting member **500** is coupled may be formed by being recessed more inward than other regions on a surface of the support portion **216.** The guide groove may be formed to be concave from the surface of the support portion **216** so that a portion of the connection portion **530** may be coupled.

A third coupling portion **212** may be formed on a side surface of the body portion **211.** The third coupling portion **212** may have a shape that protrudes outward from the side surface of the body portion **211.** The third coupling portion **212** may be disposed adjacent to an upper end of the body portion **211.** The third coupling portion **212** may be provided in plural and disposed spaced apart from each other along the perimeter of the body portion **211.** The third coupling portion **212** may include a hole. The third coupling portion **212** may be coupled with a fourth coupling portion **352** (see FIG. 5) of the mounting holder **300** to be described later. The third coupling portion **212** may be screw-coupled to the fourth coupling portion **352** using a screw.

The barrel portion **220** may be formed to protrude upward from the upper surface of the body portion **211.** The barrel portion **220** may have a circular cross-sectional shape. A hole communicating with the space within the lens holder **210** may be formed in an upper surface of the barrel portion **220.** The lens module **230** may be coupled to the hole. The hole of the lens holder **210** may be referred to as a first hole.

The lens module **230** may be coupled to a hole of the lens holder **210.** At least a portion of the lens module **230** may be disposed in a space within the lens holder **210,** and another portion may be protruded upward from the lens holder **210.** The lens module **230** may include a lens barrel **232** and a lens **234.**

The lens barrel **232** may have a circular cross-sectional shape. The lens barrel **232** may have a cylindrical shape with upper and lower surfaces being open. The lens barrel **232** may include a plurality of regions having different cross-sectional areas. A screw thread or a screw groove may be formed on an outer surface of the lens barrel **232.** A screw groove or a screw thread may be formed on an inner surface of the barrel portion **220** facing the outer surface of the lens barrel **232.** The lens barrel **232** may be screw-coupled to the inner surface of the barrel portion **220.**

On an outer circumferential surface of the lens barrel **232,** a flange **233** (see FIG. 3) being protruded more outwardly than other regions can be disposed. When the lens module **230** is coupled to the lens holder **210,** the lower surface of the flange **233** can be disposed on an upper surface of the barrel portion **220.** Accordingly, the coupling region of the lens module **230** within the lens holder **210** can be guided.

The lens **234** can be disposed within the lens barrel **232.** The lenses **234** are provided in multiple numbers and can be disposed to be spaced apart from one another with respect to an optical axis direction within the lens barrel **232.** The lenses **234** can be disposed to face the image sensor **251** (see FIG. 3) of the substrate module **250** in an optical axis direction.

The camera module **10** may include a substrate module **250.** The substrate module **250** may be disposed on a lower surface of the lens holder **210.** The substrate module **250** may be disposed in a space within the housing **100.** The substrate module **250** may include a first substrate **252,** a second substrate **254,** a connection substrate **258,** and a shield member **260.**

The first substrate **250** may be a printed circuit board (PCB). The first substrate **250** may be coupled to an image sensor **251.** The image sensor **251** may be disposed on the first substrate **250** so as to face the lens **234** of the lens module **230** in an optical axis direction. A lower surface of the lens holder **210** may be coupled with an upper surface of the first substrate **250** under the intervention of an adhesive material.

The second substrate **254** may be a printed circuit board (PCB). The second substrate **254** may be disposed of so as to be spaced apart from the first substrate **252** in an optical axis direction. The second substrate **254** may be disposed below the first substrate **252.** The connector may be coupled to a lower surface of the second substrate **254.** A power connection portion **255** (see FIG. 6) may be disposed of on a lower surface of the second substrate **254.** The power connection portion **255** may be mounted on a lower surface of the second substrate **254.** The power connection portion **255** may be coupled to a connecting member **500** to be described later.

The second substrate **254** may be electrically connected to the first substrate **252.** The second substrate **254** and the first substrate **252** may be electrically connected through the connection substrate **258.** The connection substrate **258** may be a flexible printed circuit board (FPCB). Upper and lower ends of the connection substrate **258** may be connected to the first substrate **252** and the second substrate **254,** respectively.

A protrusion having a shape being protruded outward more than other regions may be formed on a side surface of the second substrate **254.**

The shield member **260** can fix the first substrate **252** and the second substrate **254.** At least a portion of the shield member **260** can be disposed between the first substrate **252** and the second substrate **254.** The shield member **260** can be coupled to the first substrate **252** and the second substrate **254.** Through the shield member **260,** the first substrate **252** and the second substrate **254** can be disposed to be spaced apart from one another with respect to an optical axis direction. The shield member **260** can be made of a metal material. The shield member **260** can be referred to as a shield can.

The shield member **260** may include a fence portion disposed between the first substrate **252** and the second substrate **254,** a coupling portion being protruded downward from a lower surface of the fence portion and including a coupling hole so that a protrusion of the second substrate **254** is coupled thereto, and a contact portion being protruded downward from a lower surface of the coupling portion and coming into contact with an inner surface of the housing **100.** The second substrate **254** may be hook-coupled to the shield member **260** through the coupling portion. The contact portion has elasticity to press the inner surface of the housing **100,** and a ground structure may be implemented by coming into contact with an inner surface of the housing **100.** An upper surface of a fence portion may be coupled to a lower surface of the first substrate **252** by surface mount technology (SMT).

The camera module **10)** may include a mounting holder **300.** The mounting holder **300** may be coupled onto the housing **100.** The mounting holder **300** may be disposed on the lens holder **210.** The mounting holder **300** may have a square plate shape with a predetermined thickness. The mounting holder **300** may include a base. The base may include a plurality of regions with different cross-sectional areas. The plurality of regions may be disposed in an up-down direction in an optical axis direction.

The mounting holder **300** may be coupled with the housing **100.** A second coupling portion **340** having a shape being protruded downward more than other regions may be formed on a lower surface of the mounting holder **300.** The second coupling portion **340** may be disposed to face the first coupling portion **130** of the housing **100** in an optical axis direction. The second coupling portion **340** may be disposed at each of the four corner regions of a lower surface of the mounting holder **300.** The second coupling portion **340** may be coupled to the first coupling portion **130.** The second coupling portion **340** may be coupled to the coupling groove **132** of the housing **100.** A screw hole through which a screw penetrates may be formed on a lower surface of the second coupling portion **340.** The screw can be screw-coupled to a lower surface of the second coupling portion **340** by penetrating through the hole of the first coupling portion **130.**

The mounting holder **300** may be coupled with the lens holder **210.** A guide **350** (see FIG. 5) having a shape being protruded downwards more than other regions may be formed on a lower surface of the mounting holder **300.** The guide **350** may have a rectangular cross-sectional shape. The guide **350** may be disposed on an inner side of the plurality of second coupling portions **340.** The guide **350** may be disposed in the space **102** within the housing **100.** A lower surface of the guide **350** may be disposed lower than a lower surface of the second coupling portion **340.** A lower surface of the guide **350** may be in contact with an upper surface of the lens holder **210.** A lower surface of the guide **350** may be in contact with an upper surface of the body portion **211** within the lens holder **210.**

A fourth coupling portion **352** (see FIG. 5) being protruded downwardly more than other regions may be formed on a lower surface of the guide **350.** The fourth coupling portion **352** may be disposed at each of the four corner regions of the guide **350.** The fourth coupling portion **352** may be disposed so as to face the third coupling portion **212** of the lens holder **210** in a vertical direction. A lower surface of the fourth coupling portion **352** may be in contact with an upper surface of the third coupling portion **212.** A screw hole may be formed on a lower surface of the fourth coupling portion **352** so that a screw may penetrate through it. The screw may penetrate through a hole of the third coupling portion **212** and be coupled to a screw hole of the fourth coupling portion **352.**

A fifth coupling portion **330** (see FIG. 2) may be formed on an upper surface of the mounting holder **300.** The fifth coupling portion **330** may have a groove shape being recessed more downward than other regions. A screw hole may be formed on a bottom surface of the fifth coupling portion **330** so that a screw may penetrate therethrough. The fifth coupling portion **330** may be provided in multiple numbers and disposed at each of the four corner regions of an upper surface of the mounting holder **300.**

The mounting holder **300** may include a plurality of holes. The plurality of holes may be disposed so that the lens module **230** and the connecting member **500** penetrate therethrough. In detail, the plurality of holes may include a second hole **302** through which the lens module **230** penetrates, and a through hole **318** through which the connecting member **500** penetrates.

The second hole **302** may be formed to penetrate from the upper surface to the lower surface of the mounting holder **300.** The second hole **302** may be formed in a square shape. At least a portion of the lens module **230** may be disposed inside the second hole **302.** The lens module **230** may be protruded upward from the mounting holder **300** through the second hole **302.**

The through hole **318** can be disposed outside the second hole **302.** The through hole **318** can be formed to penetrate from the upper surface to the lower surface of the mounting holder **300.** The connection portion **530** of the connecting member **500,** which will be described later, can be disposed to penetrate through the through hole **318.** The cross-sectional shape of the through hole **318** can be formed to correspond to the cross-sectional shape of the connection portion **530** being disposed within the through hole **318.**

The mounting holder **300** may include a protruded portion **310.** The protruded portion **310** may have a shape being protruded upward from an upper surface of a base of the mounting holder **300.** The protruded portion **310** may be disposed between the second hole **302** and the through hole **318.** An upper surface of the protruded portion **310** may be disposed with a step more upward from an upper surface of a base of the mounting holder **300.** An upper surface of the protruded portion **310** may be formed to correspond to a cross-sectional shape of a stiffener **510** of the connecting member **500,** which will be described later. A screw hole may be formed on an upper surface of the protruded portion **310,** and the stiffener **510** may be screw-coupled onto the protruded portion **310.**

With respect to the upper surface of the base of the mounting holder **300,** the height to the upper surface of the protruded portion **310** may be longer than the height to the upper surface of the lens module **230.**

A sealing member coupling groove **306** (see FIG. 9) may be disposed on the upper surface of the mounting holder **300.** The sealing member coupling groove **306** may be formed to be recessed downwards more than other regions on an upper surface of the base of the mounting holder **300.** The sealing member coupling groove **306** may have a closed loop shape. The sealing member coupling groove **306** may be disposed on the outer side of the second hole **302.** A first sealing member **610,** which will be described later, may be coupled to the sealing member coupling groove **306.**

The camera module **10** may include a glass cover **150.** The glass cover **150** may be disposed on the mounting holder **300.** The glass cover **150** may be coupled to an upper surface of the mounting holder **300.** The glass cover **150** may include a third hole **155.** The third hole **155** may be formed to penetrate from the upper surface to the lower surface of the glass cover **150.** The third hole **155** may be disposed to be overlapped with the lens module **230** and the second hole **302** in an optical axis direction. The lens module **230** may be exposed upward through the third hole **155.**

The glass cover **150** may include a first body **160** and a second body **170** being protruded upward from an upper surface of the first body **160.**

The first body **160** may be formed in a square plate shape. A sixth coupling portion **162** being protruded downward may be formed on a lower surface of the first body **160.** The sixth coupling portion **162** may be disposed to face the fifth coupling portion **330** being formed on the mounting holder **300.** The sixth coupling portion **162** may be coupled to the fifth coupling portion **330.** The sixth coupling portion **162** may be provided in plural and disposed at each of the four corner regions of a lower surface of the glass cover **150.** A screw hole is formed on a lower surface of the sixth coupling portion **162,** and a screw may be screw-coupled to the screw hole of the sixth coupling portion **162** by penetrating the screw hole of the fifth coupling portion **330.**

The second body **170** may be formed to be protruded upward from an upper surface of the first body **160.** The cross-sectional area of the second body **170** may be formed smaller than the cross-sectional area of the first body **160.** A fence **172** having a shape being protruded upward more than other regions may be formed on an upper surface of the second body **170.** The fence **172** may be disposed along an edge of the second body **170.** The fence **172** may support a side surface of the glass **190.** The glass **190** may be disposed inside the fence **172.** When the glass **190** is disposed on the second body **170,** an upper surface of the glass **190** and an upper surface of the fence **172** may form the same plane.

A glass bonding surface **174** on which the glass **190** is disposed may be formed on an upper surface of the second body **170.** The glass bonding surface **174** may be disposed outside the third hole **155.** The glass bonding surface **174** may have a closed loop shape. The heat dissipation member **400** may be disposed on the glass bonding surface **174.**

The camera module **10** may include a glass **190.** The glass **190** may be disposed on the mounting holder **300.** The glass **190** may be disposed on the glass cover **150.** The glass **190** may be made of transparent glass. The glass **190** may be disposed on the glass bonding surface **174.** A side surface of the glass **190** may be supported by an inner surface of the fence **172.** A sealing member (not shown) may be disposed between a side surface of the glass **190** and an inner surface of the fence **172.** A lower surface of the glass **190** may be spaced apart from an upper surface of the lens module **230** in an optical direction.

The camera module **10** may include a heating member **400** to remove frost formed on a surface of the glass **190.** The heating member **400** may provide heat to the glass **190.** The heating member **400** may be a positive temperature coefficient (PTC) heater. The heating member **400** may generate heat. The heating member **400** may include a positive temperature coefficient (PTC) material and may be manufactured in the form of a semiconductor element. The heating member **400** may include a PTC element, an electrode plate, and an insulating plate. The heating member **400** may include a heating ink applied to a sheet on which a circuit pattern is formed. The heating member **400** may be applied, coated, or adhered to a surface of the glass **190.** The heating member **400** may be disposed between a lower surface of the glass **190** and the glass bonding surface **174.** Since the surface of the glass **190** is heated by the heat being generated from the heating member **400,** it is possible to prevent condensation, including frost, from occurring on a surface of the glass **190.**

The heating member **400** may include a fourth hole **410.** The fourth hole **410** may be disposed to penetrate from an upper surface to a lower surface of the heating member **400.** The fourth hole **410** may be disposed to be overlapped with the third hole **155** and the second hole **302** in an up-down direction, which is an optical axis direction.

As illustrated in FIG. 8, an electrode **420** may be disposed on a lower surface of the heating member **400.** The electrodes **420** may be provided in plurality. The plurality of electrodes **420** may include a first electrode **422** and a second electrode **424.** The polarity of the first electrode **422** and the polarity of the second electrode **424** may be different. The first electrode **422** and the second electrode **424** may be disposed to be spaced apart from each other. When the heating member **400** has a rectangular cross-sectional shape, the first electrode **422** and the second electrode **424** may be disposed to be adj acent to each other on one side of the four sides of the heating member **400.** Through the coupling of the electrode **420** and the connecting member **500,** power can be supplied to the heating member **400.**

The camera module **10** may include a connecting member **500.** The connecting member **500** may electrically connect the substrate module **250** and the heating member **400.** Power for heating the heating member **400** may be provided through the connecting member **500.** The operation of the heating member **400** may be controlled through the connecting member **500.**

The connecting member **500** may include a stiffener **510** and a connection portion **530.**

The stiffener **510** may be disposed on the protruded portion **310** of the mounting holder **300.** The stiffener **510** may be formed in a plate shape having a predetermined thickness. The stiffener **510** may be formed to correspond to the cross-sectional shape of the protruded portion **310.** The stiffener **510** reinforces the strength of one end of the connection portion **530** disposed on the protruded portion **310,** so that the connection portion **530** may be firmly maintained in a coupled state on the protruded portion **310.** The stiffener **510** includes a screw hole and may be screw-coupled onto the protruded portion **310.**

The connection portion **530** may have one end connected to the heating member **400** and the other end connected to the second substrate **254** of the substrate module **250.** The connection portion **530** may include a flexible printed circuit board (FPCB). A plurality of terminals **540** (see FIG. 2 and FIG. 9) and a temperature sensor **520** may be disposed at one end of the connection portion **530** disposed on the stiffener **510.** The plurality of terminals **540** and the temperature sensor **520** may be mounted at one end of the connection portion **530.**

The plurality of terminals **540** may include a first terminal **542** being coupled with the first electrode **422** of the heating member **400,** and a second terminal **544** being coupled with the second electrode **424** of the heating member **400.** The first terminal **542** and the second terminal **544** may provide power having opposite polarities. The first terminal **542** and the second terminal **544** may be flexibly coupled to the heating member **400.** Each of the first terminal **542** and the second terminal **544** may be a Z-Clip having a cross-section in the shape of a "Z".

The temperature sensor **520** can be disposed at one end of the connection portion **530.** The temperature sensor **520** can be disposed to be spaced apart from the plurality of terminals **540.** The temperature of the surrounding region of the glass **190** can be detected through the temperature sensor **520.** According to the present embodiment, since the temperature sensor **520** is disposed close to the glass **190,** there is an advantage in that control for removing frost can be performed more efficiently.

The other end of the connection portion **530** can be connected to the power connection portion **255** of the second substrate **254.** At least a portion of the connection portion **530** can be in contact with the support portion **216** formed on a side surface of the lens holder **210.** The connection portion **530** can have a region that is bent at least once within the housing **100.**

The connection portion **530** includes: a first region **532** having a first width; and a second regions **534** and **536** having a second width smaller than the first width, wherein the first region **532** forms one end of the connection portion **530** being placed on the protruded portion **310** and the stiffener **510,** and the second regions **534** and **536** can form the other end of the connection portion **(530** being coupled with the second substrate **254** and a central portion connecting the one end and the other end of the connection portion **530.** The second regions **534** and **536** can be disposed within the through hole **318** of the mounting holder **300.**

The camera module **10** may include a sealing member. The sealing member may include a first sealing member **610** being disposed between the glass cover **150** and the mounting holder **300,** and a second sealing member **620** being disposed between the mounting holder **300** and the housing **100.** The first sealing member **610** is coupled to a sealing member coupling groove **306** being formed on the mounting holder **300,** and may seal a space between the glass cover **150** and the mounting holder **300.** The second sealing member **620** may be disposed between a lower surface of the mounting holder **300** and an upper surface of the housing **100,** and may seal a space between the mounting holder **300** and the housing **100.**

According to the structure as described above, since the power connection structure to the heating member for surface heating of the glass can be compactly disposed within the housing, there is an advantage in that power supply and control to the heating member can be performed in an integrated manner along with the control of the camera module.

In addition, since the temperature sensor can be disposed close to the glass to detect the temperature of the lens more accurately, there is an advantage in that the heating member can be controlled more efficiently.

In addition, since only the glass cover and glass can be replaced when the glass is damaged, there is an advantage in that maintenance and repair become easy.

In the above description, it is described that all the components constituting the embodiments of the present invention are combined or operated in one, but the present invention is not necessarily limited to these embodiments. In other words, inside the scope of the present invention, all of the components may be selectively operated in combination with one or more. In addition, the terms "comprise", "include" or "having" described above mean that the corresponding component may be inherent unless specifically stated otherwise, and thus it should be construed that it does not exclude other components, but further include other components instead. All terms, including technical and scientific terms, have the same meaning as commonly understood by one of ordinary skill in the art unless otherwise defined. Terms used generally, such as terms defined in a dictionary, should be interpreted to coincide with the contextual meaning of the related art, and shall not be interpreted in an ideal or excessively formal sense unless explicitly defined in the present invention.

The above description is merely illustrative of the technical idea of the present invention, and those skilled in the art to which the present invention pertains may make various modifications and changes without departing from the essential characteristics of the present invention. Therefore, the embodiments disclosed in the present invention are not intended to limit the technical idea of the present invention but to describe the present invention, and the scope of the technical idea of the present invention is not limited by these embodiments. The protection scope of the present invention should be interpreted by the following claims, and all technical ideas inside the equivalent scope should be interpreted as being included in the scope of the present invention.

## Claims

1. A camera module comprising:
a lens holder including a first hole;
a lens module, at least a portion thereof is coupled to the first hole and protruded upwardly from the lens holder;
a mounting holder disposed on the lens holder and including a second hole in which a portion of the lens module is disposed;
a glass disposed on the mounting holder;
a heating member disposed on a surface of the glass;
a substrate module disposed downwardly from the lens holder; and
a connecting member for connecting the heating member and the substrate module.

2. A camera module comprising:
a substrate module;
a connecting member electrically connected to the substrate module;
a lens module disposed at an upper side of the substrate module;
a mounting holder having a plurality of holes through which the lens module and the connecting member penetrate;
a glass disposed on the mounting holder; and
a heating member disposed on a lower surface of the glass and electrically connected to the connecting member,
wherein the mounting holder comprises a base, a through hole formed in the base and through which a portion of the connecting member is disposed, and a protruded portion formed to be protruded from one surface of the base, and
wherein a portion of the connecting member is disposed on the protruded portion, and a portion of the connecting member is in contact with the heating member.

3. The camera module according to claim 1 or claim 2,
wherein the mounting holder includes a through hole in which a portion of the connecting member is disposed.

4. The camera module according to claim 1,
wherein a protruded portion to which one end of the connecting member is coupled is disposed on an upper surface of the mounting holder.

5. The camera module according to claim 4,
wherein the connecting member includes a first region and a second region having a width smaller than that of the first region, and
wherein the first region is disposed in the protruded portion.

6. The camera module according to claim 1 or claim 2, including:
a glass cover coupled onto the mounting holder and having the glass coupled to an upper surface.

7. The camera module according to claim 1 or claim 2, including:
a housing coupled to a lower portion of the mounting holder and accommodating the substrate module and the lens holder inside.

8. The camera module according to claim 1,
wherein at least a portion of the connecting member is disposed outside the lens holder.

9. The camera module according to claim 8,
wherein the lens holder includes a body portion and a support portion protruded from a side surface of the body portion, and
wherein a portion of the connecting member is in contact with the support portion.

10. The camera module according to claim 9,
wherein the support portion includes a portion having a concave guide groove, and
wherein a portion of the connecting member is disposed in the guide groove.
